# EUROPEAN PATENT APPLICATION

(11) **EP 2 011 418 A2**
(43) Date of publication of application: **07.01.2009**
(21) Application number: 08158996.2
(22) Date of filing: 25.06.2008
(51) Int. Cl.: A47B 13/12

(54) **Piece of furniture comprising glass sheets**

(30) Priority: 04.07.2007 IT PD20070230
(71) Applicant: Reflex S.P.A., 31056 Roncade (TV) (IT)
(72) Inventor: Lucatello, Luciano, 31056, Biancade TV (IT)
(74) Representative: Modiano, Micaela Nadia

(57) **Abstract**

A piece of furniture (10) which comprises at least one glass sheet (11a, 11b), particularly of the type of extensible tables (12), the at least one sheet (11a, 11b) being made of glass with at least one surface (13a, 13b) which is covered by a layer (14) of amorphous carbon, and a surface tempering treatment being provided thereon to contrast the wear at least of the sliding surface (13a, 13b) against another surface.

## Description

The present invention relates to a piece of furniture which comprises glass sheets, particularly of the type of extensible tables.

Extensible tables made of various natural or synthetic materials are currently known which have a main top for use for the user, below which extractable extensions thereof are accommodated within a suitable compartment.

These extensions, generally made of the same material as the main top, are provided with at least one guide which couples them slidingly and/or rotatably to the structure of the table, so that once they are extracted they have a surface which is aligned with the exposed surface of the main top, so as to form with it a single large surface for use for the user.

One drawback that extensible tables, as well as in general pieces of furniture with extensible or extractable surfaces, generally have, is that during the extraction of the extension or extensions their surfaces slide against the main top or against other parts of the structure that supports them and are abraded or scratched, to the full disadvantage of the aesthetics of the piece of furniture.

Pieces of furniture with glass surfaces are currently used and are appreciated for the aesthetic characteristics that this choice of material entails.

Extensible tables of this type, i.e., with at least one glass extension which can be arranged adjacent to the main top, also made of glass, are currently produced with particular care in limiting or avoiding the sliding of the glass sheets with which the top and the extension or extensions are made.

The aim of the present invention is to provide a piece of furniture comprising glass sheets whose mutual sliding does not compromise their surface aesthetics with marks of wear or scratches.

Within this aim, an object of the invention is to provide a piece of furniture which is structurally simple and can be produced with relatively low costs.

This aim and this and other objects, which will become better apparent hereinafter, are achieved by a piece of furniture comprising at least one glass sheet, particularly of the type of extensible tables, characterized in that said at least one glass sheet has at least one surface which is covered by a layer of amorphous carbon, a surface tempering treatment being provided thereon to contrast the wear at least of the sliding of said surface against another surface.

Further characteristics and advantages of the invention will become better apparent from the following detailed description of a preferred but not exclusive embodiment of the piece of furniture comprising glass sheets according to the invention, illustrated by way of non-limiting example in the accompanying drawings, wherein:

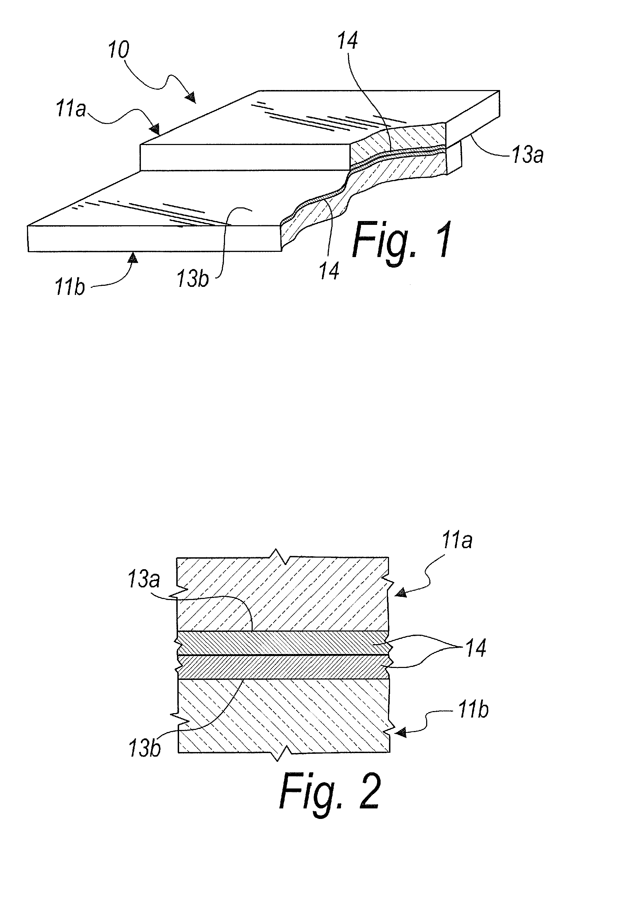

Figure 1 is a partially sectional perspective view of the piece of furniture according to the invention;
Figure 2 is an enlarged-scale sectional view of a detail of the piece of furniture according to the invention;

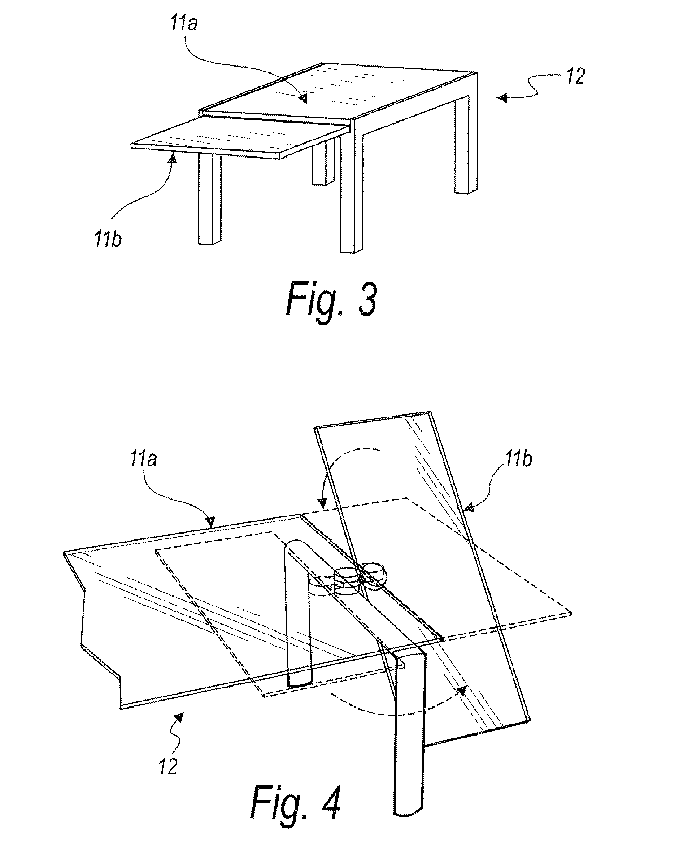

Figure 3 is a perspective view of an embodiment of the piece of furniture according to the invention;
Figure 4 is a perspective view of an extensible table according to the invention with rotating sheets-extensions.

It is noted that anything found to be already known during the patenting process is understood not to be claimed and to be the subject of a disclaimer.

With reference to the figures, the reference numeral 10 generally designates a piece of furniture, particularly of the type of extensible tables 12, which comprises at least two sheets 11a and 11b which can slide by sliding against each other.

A specific particularity of the piece of furniture according to the invention is that the glass sheets 11a and 11b have surfaces 13a, 13b which are coated by an amorphous carbon layer 14 and there is also a surface tempering treatment to contrast the wear at least of their sliding surfaces 13a, 13b.

Preferably, the amorphous carbon layer 14 is of the DLC (Diamond Like Carbon) type deposited on the surfaces 13a, 13b by means of a PECVD (Plasma Enhanced Chemical Vapor Deposition) treatment.

This process provides on the sheets 11a and 11b the DLC amorphous carbon layer 14, which has excellent characteristics of hardness and lubricating characteristics which, upon mutual sliding of the sheets 11a and 11b, contrast their wear due to abrasion and scratching.

Further, the sheets 11a and 11b are advantageously tempered.

Likewise, a piece of furniture comprising glass sheets, particularly of the type of tops for tables and kitchen worktops, according to the invention, comprises at least one sheet made of glass, with at least one surface coated by a layer of amorphous carbon of the DLC (Diamond Like Carbon) type deposited thereon by means of a PECVD (Plasma Enhanced Chemical Vapor Deposition) treatment, a surface tempering treatment being provided on said sheet in order to contrast the wear at least of said surface.

The glass sheets of pieces of furniture according to the invention have treated surfaces which are particularly resistant to being scratched due both to sliding against another glass sheet and due to sliding against bodies such as pans, cutlery or other items used domestically.

This resistance to being scratched is a result of a combination of surface hardness with the sliding enhancement effect produced by the layer of DLC-type amorphous carbon.

In practice it has been found that the invention achieves the intended aim and objects, providing a piece of furniture which comprises glass sheets which do not scratch or wear due to said sliding.

Further, a piece of furniture according to the invention, by not requiring to avoid the sliding of the sheets, is structurally simple and can be manufactured with relatively low costs.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the contingent shapes and dimensions, may be any according to requirements and to the state of the art.

The disclosures in Italian Patent Application No. PD2007A000230 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A piece of furniture (10) comprising at least one glass sheet (11a, 11b), particularly of the type of extensible tables (12), **characterized in that** said glass sheet (11a, 11b) has at least one surface (13a, 13b) which is covered by a layer (14) of amorphous carbon, a surface tempering treatment being provided thereon to contrast the wear at least of the sliding of said surface (13a, 13b) against another surface.

2. The piece of furniture according to claim 1, **characterized in that** said amorphous carbon layer (14) is of the DLC (Diamond Like Carbon) type, deposited on said at least one surface (13a, 13b) by means of a PECVD (Plasma Enhanced Chemical Vapor Deposition) treatment.

3. The piece of furniture according to the preceding claims, **characterized in that** said at least one glass sheet (11a, 11b) is tempered.
